# EUROPEAN PATENT APPLICATION

(11) **EP 2 607 060 A1**
(43) Date of publication of application: **26.06.2013**
(21) Application number: 11195350.1
(22) Date of filing: 22.12.2011
(51) Int. Cl.: B29C 70/48, F03D 1/06

(54) **Method and arrangement to manufacture a blade of a wind turbine**

(71) Applicant: Siemens Aktiengesellschaft, 80333 München (DE)
(72) Inventor: Jacobsen, Peter Andreas Lund, 9230 Svenstrup J (DK)

(57) **Abstract**

The invention refers to a method and to an arrangement to manufacture a blade of a wind turbine. According to the invention a blade of a wind turbine is manufactured by using a high energy electro beam. A closed mould system is used to encapsulate the blade. The blade shows a sandwich structure comprising a number of dry layers. A matrix material is brought into the closed mould to wet the dry layers of the blade. The matrix material is cured to achieve a hardened blade or to result in a hardened blade. A high energy radiation is used to interact with a compound, which is mixed with the matrix material, in a way that the curing of the matrix material is initiated and executed.

## Description

The invention refers to a method and to an arrangement to manufacture a blade of a wind turbine.

Wind turbine blades are preferably manufactured by using the well known "Vacuum Assisted Resin Transfer Moulding, VARTM"-process.

The VARTM-process uses in principle two moulds, blade components, a matrix materiel like resin and a technical vacuum or low pressure. A first mould is arranged and used as a blade-carrier. A number of dry layers, which may comprise fiber-mats, balsa-wood, prefabricated components and the like, are arranged as blade components on top of the fist mould in a sandwich structure. The dry layers are arranged until a final three-dimensional shape of the blade is achieved. Thus the blade shows a sandwich structure.

A second mould is connected with the first mould in a way that the sandwich structure of the blade is encapsulated by the closed-mould-system. A technical vacuum or a low-pressure is applied to the closed mould system thus air is removed out of the sandwich structure of the blade. At the same time the matrix material (resin) is sucked into the closed-mould-system by the applied vacuum or pressure. The layers are wetted by the resin. The resin cures or hardens for a certain time resulting in a hardened blade. The blade is removed from the closed mould system. If needed additional steps are done in view to the blade-surface (like grinding, painting, ...).

The VARTM-process is quite slow due to the time which is needed for the slow infusion of the matrix material and due to the time which is needed for the curing of the matrix material.

For example a time period of three up to four hours is needed to infuse the resin into the closed mould system. Next a time period of 8 hours is needed to heat the closed mould system to start and finalize the curing of the resin. Next some hours are needed to cool down the temperature of the closed mould system before the system can be opened to remove the blade.

Present VARTM-systems are based on the use of epoxy or other matrix materials, which needs to be activated by heat for the curing. Thus these systems are quite slow and energy-extensive.

Even the huge amount of blade-material contributes to the time needed - it takes quite a long time to heat up approximately 10 tons of material, which is needed for the blade-manufacturing.

From a theoretical point of view an optimized system is judged to take 1-2 hours for the infusion-period and 4-6 hours for the heating/curing period.

It is known to use UV-light to start and to control the curing of a matrix material within a component manufacturing process. The UV-light can not be used within a wind turbine blade manufacturing process as the UV-light penetrates the material only by at best 1 cm in depth while the blade might show a thickness of material up to 15 cm or more.

It is therefore the aim of the invention to provide an improved method to manufacture a blade of a wind turbine and an improved arrangement to manufacture a blade of a wind turbine, which are less time extensive and which are less energy extensive as the prior-art solutions known.

This aim is reached by the features of the claims 1 and 8. Preferred configurations are object of the dependent claims. According to the invention a blade of a wind turbine is manufactured by using a high energy radiation. A closed mould system is used to encapsulate the blade. The blade shows a sandwich structure comprising a number of dry layers. A matrix material is brought into the closed mould to wet the dry layers of the blade. The matrix material is cured to achieve a hardened blade or to result in a hardened blade. The high energy radiation interacts with a compound, which is mixed with the matrix material, in a way that the curing of the matrix material is initiated and executed.

Preferably the high energy radiation activates the initiator thus a chemical process is started, which in turn results in the curing of the matrix material.

Preferably a high energy electro beam or a x-ray beam is used as high energy radiation to initiate, execute and maintain the curing until the blade is hardened and thus finalized.

The high energy radiation penetrates the whole volume of the blade structure thus the curing is accelerated within the whole blade structure in an equal manner.

The invention allows the reduction of time, which is needed for the blade manufacturing. The curing time can be reduced from several hours as described above down to a time period of 10-30 minutes only.

Preferably the high energy radiation system (i.e. the high energy electro beam system or the X-ray-system) is placed or moved inside the blade. Typical wind turbine blades comprise a cavity, which is arranged inside the blade-volume. This cavity is used to accommodate the high energy radiation system.

Preferably the high energy radiation system is located close to the centre of the blade. Thus the high energy radiation system is arranged in a central manner into the blade-cavity to allow the radiation taking effect to all relevant blade-volumes-in-part in an equal manner.

Preferably the matrix material is mixed with an appropriate compound, which is used as initiator. The initiator used is typically a mix of different molecules.

Preferably the matrix-material is mixed with the so called "(4-Octyloxyphenyl) phenyliodonium hexafluoroantimonate" to initiate and to maintain the curing process.

This "(4-Octyloxyphenyl) phenyliodonium hexafluoroantimonate" is an appropriate X-ray initiator.

Preferably an optimized matrix material is used. The matrix material is optimized in view to the time, which is needed for the infusion of the matrix material. It is even optimized in view to the mixing with the initiator. Thus chemical processes are optimized while the infusion time is reduced.

An appropriate matrix material is "Dicyclopentadiene" for example, as this material shows a quite low viscosity.

Preferably the high energy radiation system is arranged in a stationary manner in the closed mould system or it might even be moved from a first end of the closed mould system to a second end of the closed mould system along a straight line or along the longitudinal axis of the blade to be manufactured (i.e. along the longitudinal axis of the closed mould system).

Preferably the sandwich structure of the blade is arranged within the closed mould system as described above. The matrix material is injected into the closed mould system by the technical vacuum or low-pressure.

After a time period of approximately 1-2 hours the high energy radiation system is turned into action, thus the curing of the matrix material is initiated and takes place. The curing time is reduced to a time period of only 10-30 minutes. Next the closed mould system is cooled and opened to remove the finished blade finally.

The invention is shown in more details by help of a figure. The figure shows a preferred configuration and do not limit the scope of the invention.

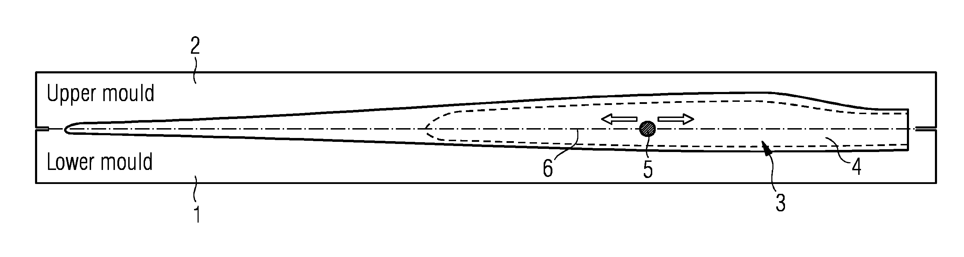

FIG 1 shows a lower mould 1 and an upper mould 2, which are part of the closed-mould-system. A sandwich structure of a blade 3 is encapsulated by the lower mould 1 and by the upper mould 2.

The blade 3 comprises a cavity 4. Within this cavity 4 a X-ray-source 5 is arranged as X-ray-system.

The X-ray-source 5 is preferably moved within the cavity 4 along the longitudinal axis 6 of the blade 3.

## Claims

**1.** Method to manufacture a blade of a wind turbine,
- where a closed mould system is used to encapsulate the blade, while the blade shows a sandwich structure comprising a number of dry layers,
- where a matrix material is brought into the closed mould to wet the dry layers of the blade,
- where the matrix material is cured to achieve a hardened blade,
**characterized in,**
- **that** the matrix material is mixed with a compound, and
- **that** a high energy radiation is used to interact with the compound of the matrix material in a way, that the curing of the matrix material is initiated and executed.

**2.** Method according to claim 1, **characterized in, that** a high energy electro beam or a X-ray is used as high energy radiation to initiate and execute the curing.

**3.** Method according to claim 1 or to claim 2, **characterized in, that** the high energy radiation is controlled in a way that it penetrates the whole volume of the blade.

**4.** Method according to claim 1 or to claim 2, **characterized in, that** a system, which generates the high energy radiation, is placed within the closed mould system or is moved within the closed mould system.

**5.** Method according to claim 4, **characterized in, that** the high energy radiation system is placed stationary within a blade-cavity or is moved within the blade-cavity.

**6.** Method according to claim 1, **characterized in, that** the matrix-material is mixed with (4-Octyloxyphenyl) phenyliodonium hexafluoroantimonate, which is used as compound and initiator.

**8.** Method according to claim 1, **characterized in, that** Dicyclopentadiene is used as matrix-material.

**9.** Arrangement to manufacture a blade of a wind turbine,
- where the blade is arranged within a closed mould system,
- where the blade comprises a sandwich structure,
- where the sandwich structure comprises a number of dry layers,
- where the dry layers are connected via an applied matrix material, while the matrix material is brought into the closed mould system to wet the dry layers of the blade and while the matrix material is cured to achieve a hardened blade,
**characterized in, that**
- a high energy radiation system is arranged and prepared in a way that the radiation of the system interacts with a compound, which is mixed with the matrix material, thus the curing of the matrix material is initiated and executed.

**9.** Arrangement according to claim 8, **characterized in, that** an X-ray system or an high energy electro beam system is arranged and prepared as high energy radiation system to interact with the compound of the matrix material.

**10.** Arrangement according to claim 8 or claim 9, **characterized in, that** the high energy radiation system is connected with a controller, which is arranged and prepared to control the radiation penetrating the whole volume of the blade.

**11.** Arrangement according to claim 8 or claim 9, **characterized in, that** the high energy radiation system is arranged within the closed mould system or is arranged in a movable manner within the closed mould system.

**12.** Arrangement according to claim 8 or claim 9, **characterized in, that** the high energy radiation system is arranged in a stationary manner within a blade-cavity or is arranged in a movable manner within the blade-cavity.

**13.** Arrangement according to claim 8, **characterized in, that** the matrix-material comprises (4-Octyloxyphenyl) phenyliodonium hexafluoroantimonate, which is used as compound and initiator.

**14.** Arrangement according to claim 9, **characterized in, that** the matrix material is Dicyclopentadiene.
